# EUROPEAN PATENT APPLICATION

(11) **EP 4 443 627 A1**
(43) Date of publication of application: **09.10.2024**
(21) Application number: 22900631.7
(22) Date of filing: 01.12.2022
(51) Int. Cl.: H01M 50/317, H01M 50/333, H01M 50/244

(54) **PRESSURE RELIEF DEVICE, BATTERY PACK, AND VEHICLE**

(30) Priority: 02.12.2021 CN 202123024110 U
(71) Applicant: Beijing Chehejia Automobile Technology Co., Ltd., Beijing 101300 (CN)
(72) Inventor: LIU, Yangbin, Beijing 101300 (CN); HUANG, Xiong, Beijing 101300 (CN); CHEN, Zhennan, Beijing 101300 (CN)
(74) Representative: Maiwald GmbH
(86) International application number: PCT/CN2022/135967
(87) International publication number: WO 2023/098827

(57) **Abstract**

The present disclosure relates to a pressure relief device, a battery pack, and a vehicle. The pressure relief device comprises a ventilation membrane, a valve body, an elastic seat assembly, and a protective cover. The ventilation membrane is arranged on a side of the elastic seat assembly and configured to gas discharge; the valve body is located on the side of the elastic seat assembly close to the ventilation membrane; the protective cover covers the side of the valve body away from the ventilation membrane; and the elastic seat assembly is located between the valve body and the protective cover, and the elastic seat assembly is capable of moving towards the protective cover so as to form a gas discharge channel between the valve body and the elastic seat assembly or moving away from the protective cover so as to close the gas discharge channel.

## Description

### CROSS-REFERENCE TO RELATED APPLICATION

The present application is based on and claims the priority of Chinese Patent Application No. 202123024110.6, filed on December 2, 2021, the entire contents of which are herein incorporated by reference.

### FIELD

The present disclosure relates to the field of battery pressure relief technologies, and in particular to a pressure relief device, a battery pack and a vehicle.

### BACKGROUND

Pressure relief devices are a type of device used to balance a gas pressure difference between the inside and outside of battery packs.

At present, a commonly used pressure relief device is mainly composed of a gas-permeable membrane and an ejector pin. When the gas pressure in the battery pack is small, the gas discharge may be performed through a small hole in the gas-permeable membrane. As the gas pressure in the battery pack increases, the gas-permeable membrane will deform to some extent. When the gas pressure in the battery pack exceeds a certain limit, the deformation of the gas-permeable membrane will touch the ejector pin and be punctured to form a gas-permeable hole for rapid gas discharge.

However, the gas-permeable membrane is a composite material, which makes the deformation consistency of the gas-permeable membrane poor, and in turn leads to the poor consistency of the bursting pressure of the gas-permeable membrane. Thus, it is difficult to ensure the reliability of pressure relief when thermal runaway of the battery pack.

### SUMMARY

In order to solve the above-mentioned technical problems or at least partially solve the above-mentioned technical problems, the present disclosure provides a pressure relief device, a battery pack and a vehicle.

In a first aspect, the present disclosure provides a pressure relief device, including a gas-permeable membrane, a valve body, an elastic seat assembly and a protective cover;
the gas-permeable membrane is arranged at a side of the elastic seat assembly and configured for gas discharge;
the valve body is located at a side of the elastic seat assembly close to the gas-permeable membrane; the protective cover covers a side of the valve body away from the gas-permeable membrane; and the elastic seat assembly is located between the valve body and the protective cover, and the elastic seat assembly is movable towards the protective cover to define an gas discharge channel between the valve body and the elastic seat assembly, or movable away from the protective cover to close the gas discharge channel.

In some embodiments, the elastic seat assembly includes an elastic base and an elastic member, the elastic base is arranged between the valve body and the protective cover, and the elastic member is fitted over a side of the elastic base close to the protective cover and partially protrudes outside the elastic base; and
the elastic base moves towards the protective cover when the elastic member is subjected to a force, to define the gas discharge channel between the valve body and the elastic base, or moves away from the protective cover under an action of an elastic deformation force of the elastic member, to close the gas discharge channel.

In some embodiments, a cross-section of the elastic member gradually increases along a direction from the valve body to the protective cover.

In some embodiments, the elastic member is a pagoda-shaped. In some embodiments, a first sealing member is arranged between the valve body and the elastic base, and the first sealing member is configured to seal the valve body and the elastic base when the gas discharge channel is closed.

In some embodiments, the pressure relief device includes a baffle. The baffle is arranged at a side of the gas-permeable membrane away from the elastic seat assembly to protect the gas-permeable membrane, and a gas-permeable hole is provided in the baffle.

In some embodiments, a reserved gap is defined between the baffle and the gas-permeable membrane, and between the gas-permeable membrane and the elastic seat assembly.

In some embodiments, the reserved gap is in a range of 0.8mm to 1mm.

In some embodiments, a side of the valve body away from the protective cover is coupled to a component to be mounted, and a second sealing member is arranged between the valve body and the component to be mounted; a side of the valve body away from the protective cover defines a reserved slot adapted to the second sealing member, and the second sealing member is arranged in the reserved slot and is in interference fit with the reserved slot.

In some embodiments, a peripheral wall of the second sealing member is provided with a plurality of protrusions spaced from each other along a circumferential direction of the second sealing member, and the second sealing member is arranged in the reserved slot and is in interference fit with the reserved slot through the plurality of protrusions.

In some embodiments, a protruding height of the protrusion is in a range of 0.25mm to 0.3mm.

In some embodiments, the pressure relief device includes a shield cover. The shield cover is provided on a side of the protective cover away from the valve body, and a conveying channel in communication with the gas discharge channel is defined between the shield cover and the protective cover, and a bottom of the shield cover defines a gas discharge port in communication with the conveying channel.

In some embodiments, the valve body, the elastic base and the protective cover are cast by an alloy or plastic composite material.

In a second aspect, the present disclosure also provides a battery pack, including a pressure relief device.

In a third aspect, the present disclosure also provides a vehicle, including a battery pack.

The present disclosure provides a pressure relief device, a battery pack and a vehicle, and the pressure relief device includes a gas-permeable membrane, a valve body, an elastic seat assembly, and a protective cover. By arranging the gas-permeable membrane at a side of the elastic seat assembly, when a pressure in the battery pack with the pressure relief device is small, gas may be discharged through the gas-permeable hole in the gas-permeable membrane. In addition, the elastic seat assembly is arranged between the valve body and the protective cover, so that when the pressure in the battery pack increases, the elastic seat assembly may move towards the protective cover under the gas pressure of the battery pack to open the gas discharge channel between the valve body and the elastic seat assembly for rapid gas discharge to achieve pressure relief. When the pressure in the battery pack decreases, the elastic seat assembly moves away from the protective cover, to close the gas discharge channel, and the gas discharge is performed only through the gas-permeable membrane. Therefore, the need to open the gas discharge channel for rapid gas discharge is selected according to the pressure in the battery pack, to ensure reliable pressure relief of the battery pack.

### BRIEF DESCRIPTION OF THE DRAWINGS

The drawings herein are incorporated into the specification and form part of the specification, show embodiments conforming to the present disclosure and are used together with the description to explain the principles of the present disclosure.

In order to more clearly illustrate the technical solutions in embodiments of the present disclosure or in the related art, the drawings required in the description of embodiments or related art will be briefly described below, and it is obvious that for those skilled in the art, other drawings may also be obtained from these drawings without creative labor.
FIG. 1 is an exploded view of a pressure relief device according to an embodiment of the present disclosure;
FIG. 2 is a schematic diagram of a valve body and a second sealing ring of a pressure relief device according to an embodiment of the present disclosure;
FIGS. 3A to 3B are exploded views of a baffle, a gas-permeable membrane and an elastic base of a pressure relief device according to an embodiment of the present disclosure from different viewing angles;
FIG. 4 is an assembly view of a baffle, a gas-permeable membrane and an elastic base of a pressure relief device according to an embodiment of the present disclosure;
FIG. 5 is a cross-sectional view taken along A-A of FIG. 4;
FIGS. 6A and 6B are exploded views of an elastic base and an elastic member of a pressure relief device according to an embodiment of the present disclosure;
FIG. 7 is a cross-sectional view of a pressure relief device according to an embodiment of the present disclosure, with a gas discharge channel not opened;
FIG. 8 is a partially enlarged schematic diagram at portion B of FIG. 7;
FIG. 9 is a schematic diagram of a gas discharge path of a pressure relief device according to an embodiment of the present disclosure, with a gas discharge channel not opened;
FIG. 10 is a cross-sectional view of a pressure relief device according to an embodiment of the present disclosure, with a gas discharge channel opened;
FIG. 11 is a partially enlarged schematic diagram at potion C of FIG. 10;
FIG. 12 is a schematic diagram of a gas discharge path of a pressure relief device according to an embodiment of the present disclosure, with a gas discharge channel opened;
FIG. 13 is a schematic diagram of a gas discharge path when a pressure relief device is provided with a shield cover according to an embodiment of the present disclosure, with a gas discharge channel opened;
FIG. 14 is a schematic diagram of an elastic member of a pressure relief device according to an embodiment of the present disclosure; and
FIG. 15 is a partial schematic diagram of a valve body and a protective cover of a pressure relief device according to an embodiment of the present disclosure.

Reference numerals: 1. gas-permeable membrane; 2. valve body; 21. first sealing member; 22. second sealing member; 23. reserved slot; 24. protrusion; 3. elastic seat assembly; 31. elastic base; 32. elastic member; 4. protective cover; 41. channel; 42. outlet; 5. baffle; 51. middle hole; 6. gas discharge channel; 7. shield cover; 71. gas discharge port; 8. conveying channel.

### DETAILED DESCRIPTION OF THE PRESENT DISCLOSURE

In order to be able to understand more clearly the purpose, features, and advantages of the present disclosure, the solution of the present disclosure is further described below. It should be noted that, without conflict, embodiments and the features in embodiments of the present disclosure may be combined with each other.

Many specific details are set out in the following description in order to fully understand the present disclosure, but the present disclosure may also be implemented in other ways different from those described herein. Obviously, embodiments in the specification are only some embodiments of the present disclosure, not all embodiments.

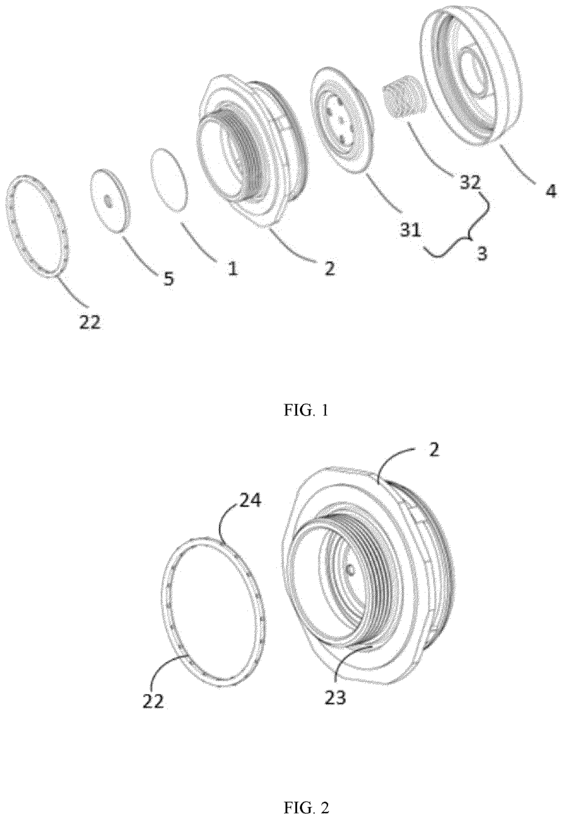

With reference to FIGS. 1 to 15, embodiments of the present disclosure provide a pressure relief device. The pressure relief device may be specifically a pressure relief valve, and the pressure relief valve may be configured to carry out gas pressure balance in a battery pack of new energy vehicles such as electric vehicles, to avoid damage to the battery pack caused by excessive gas pressure difference between the inside and outside of the battery pack due to temperature change. Specifically, the pressure relief device includes a gas-permeable membrane 1, a valve body 2, an elastic seat assembly 3, and a protective cover 4.

The gas-permeable membrane 1 is arranged at a side of the elastic seat assembly 3 and is configured for gas discharge. That is, with reference to a drawing direction shown in FIGS. 1, 7 and 10, the gas-permeable membrane 1 is arranged at a left side of the elastic seat assembly 3, and a tiny gas-permeable hole is defined in the gas-permeable membrane 1, which may allow a gas to pass through and is water-impermeable, and thus may be used to discharge gas through the gas-permeable hole in the gas-permeable membrane 1 when the gas pressure change in the battery pack is small, to balance the gas pressure difference between the inside and outside the battery pack, and protect the battery pack from being damaged.

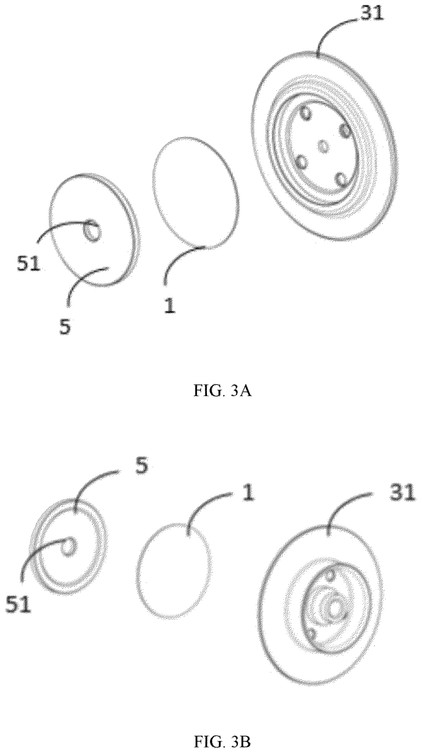

With reference to FIGS. 1, 3A, and 3B, the device further include a baffle 5. The baffle 5 is arranged at a side of the gas-permeable membrane 1 away from the elastic seat assembly 3, that is, at a left side of the elastic seat assembly 3, and the baffle 5 has a middle hole 51, so that a gas flow is allowed to pass through the middle hole 51 and the gas-permeable hole in the gas-permeable membrane 1 sequentially and is discharged. In addition, the baffle 5 is located at a side of the gas-permeable membrane 1 and may play a role of protecting and pressing the gas-permeable membrane 5, preventing the gas-permeable membrane 1 from loosening, displacing or scratching.

The valve body 2 is located at a side of the elastic seat assembly 3 close to the gas-permeable membrane 1, the protective cover 4 covers a side of the valve body 2 away from the gas-permeable membrane 1, and the elastic seat assembly 3 is located between the valve body 2 and the protective cover 4. The elastic seat assembly 2 is movable towards the protective cover 4 to define a gas discharge channel 6 between the valve body 2 and the elastic seat assembly 3, or movable away from the protective cover 4 to fit the valve body 2 with the elastic seat assembly 3, that is, the gas discharge channel 6 is closed.

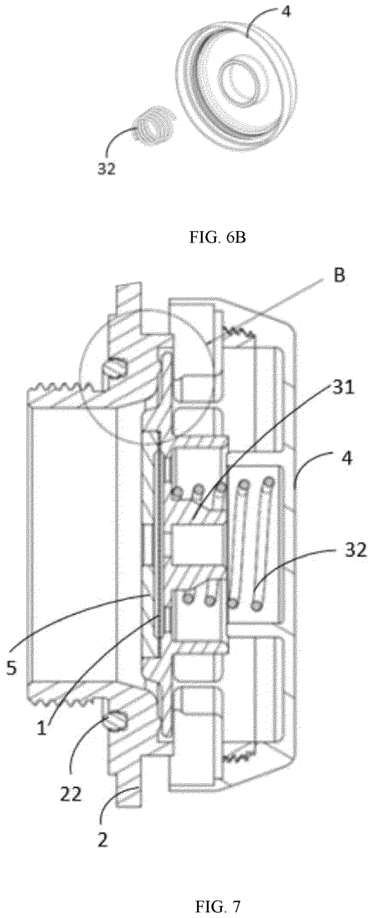

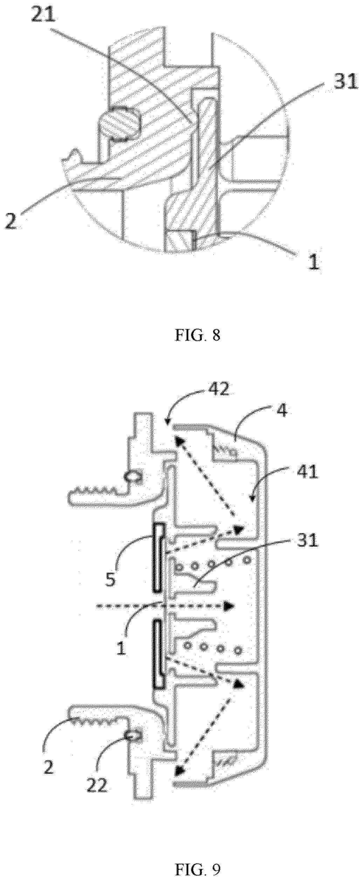

In a specific implementation, with reference to FIGS. 7 and 9, when the gas pressure change of the battery pack is small, the gas passes through the middle hole 51 and the gas-permeable membrane 1, flows through a channel 41 enclosed by the elastic seat assembly 3 and the protective cover 4, and finally discharges through an outlet 42 between the valve body 2 and the protective cover 4. A specific gas discharge path of the gas may refer to arrows in FIG. 9.

That is to say, when the gas pressure change of the battery pack is small, the elastic seat assembly 3 is fitted with the valve body 2 or the elastic seat assembly 3 is closed to the valve body 2, that is, the gas discharge channel 6 between the valve body 2 and the elastic seat assembly 3 is closed, and the gas needs to flow through the channel 41 between the elastic seat assembly 3 and the protective cover 4 after passing through the gas-permeable membrane 1. Since the gas-permeable hole of the gas-permeable membrane 1 is small, the gas flow through the gas-permeable membrane 1 is small, so it is suitable for a case where the gas pressure change of the battery pack is small.

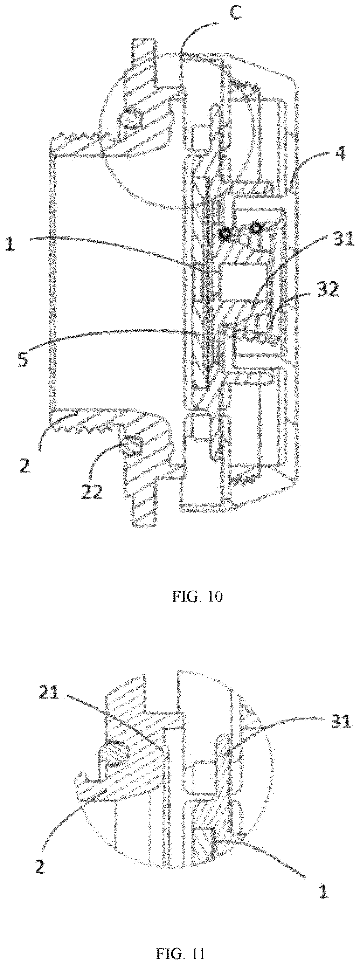

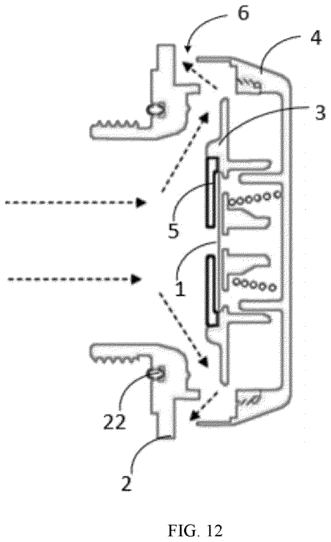

When the gas pressure change in the battery pack is great, with reference to FIGS. 10 and 12, the elastic seat assembly 3 moves towards the protective cover 4 under an action of the gas pressure at this moment, to open the gas discharge channel 6 between the valve body 2 and the elastic seat assembly 3, the gas is directly discharged through the gas discharge channel 6 at this moment, may realize rapid gas discharge without passing through the gas-permeable membrane 2. The specific gas discharge path of the gas may refer to arrows shown in FIG. 12. Because the gas discharge volume or gas discharge efficiency of the gas discharge channel 6 is significantly greater than the gas discharge volume or gas discharge efficiency of the gas-permeable membrane 1, it is suitable for rapid pressure relief when the gas change of the battery pack is great. When rapid pressure relief reaches a small gas pressure difference between the inside and outside of the battery pack, the elastic seat assembly 3 may move away from the protective cover 4 under an action of its own elastic restoring force, that is, it may be reset by itself to close the gas discharge channel 6.

In embodiments of the present disclosure, by arranging the elastic seat assembly 3 to move towards the protective cover 4 to open the gas discharge channel 6 for rapid pressure relief or to move away from the protective cover 4 under the action of its own elastic restoring force to close the gas discharge channel 6 for normal pressure relief, the reliability of pressure relief may be guaranteed, and the elastic seat assembly 3 may be reset by itself, and may be used repeatedly without replacing or repairing.

To sum up, in the pressure relief device provided in embodiments of the present disclosure, by arranging the gas-permeable membrane 1 at a side of the elastic seat assembly 3, when the pressure in the battery pack with the pressure relief device is small, the gas may be discharged through the gas-permeable hole in the gas-permeable membrane 1. In addition, the elastic seat assembly 3 is arranged between the valve body 2 and the protective cover 4, so that when the pressure in the battery pack increases, the elastic seat assembly 3 may move towards the protective cover 4 under the gas pressure of the battery pack to open the gas discharge channel 6 between the valve body 2 and the elastic seat assembly 3 for rapid gas discharge to achieve pressure relief. When the pressure in the battery pack decreases, the elastic seat assembly 3 moves away from the protective cover 4 such that the valve body 2 is fitted with the elastic seat assembly 3, that is, the gas discharge channel 6 is closed, and the gas discharge is performed only through the gas-permeable membrane 1. Therefore, the need to open the gas discharge channel 6 for rapid gas discharge is selected according to pressure degree in the batter pack, to ensure reliable pressure relief of the battery pack. In addition, the baffle 5 is arranged at a side of the gas-permeable membrane 1 away from the elastic seat assembly 3, so that the gas-permeable membrane 1 may be compressed and protected, and the gas-permeable membrane 1 may be avoided from scratching.

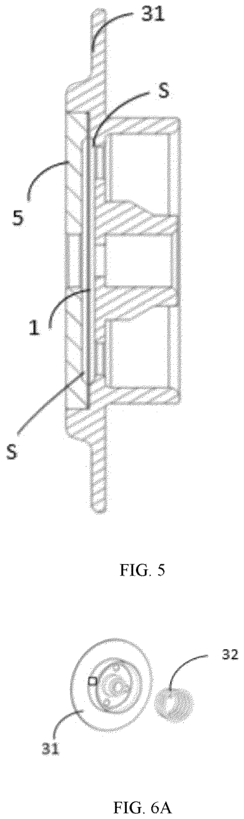

In a specific implementation, with reference to FIGS. 6A and 6B, the elastic seat assembly 3 includes an elastic base 31 and an elastic member 32. The elastic base 31 is located between the valve body 2 and the protective cover 4, and the elastic member 32 is fitted over a side of the elastic base 31 close to the protective cover 4 and partially protrudes outside the elastic base 31. The elastic base 31 may move towards the protective cover 4 when the elastic member 32 is subjected to a force, to define the gas discharge channel 6 between the valve body 2 and the elastic base 31, or move away from the protective cover 6 under an action of the elastic deformation force of the elastic member 32, such that the valve body 2 and the elastic base 31 are fitted to close the gas discharge channel 6.

That is to say, when the gas pressure in the battery pack changes to a certain limit, the elastic member 32 will be compressed such that the elastic base 31 moves towards the protective cover 4 to open the gas discharge channel 6 for rapid pressure relief, and when the pressure relief reaches a certain extent, the gas pressure difference in the battery pack is less than the above-mentioned limit, the elastic member 32 will elongate under an action of its own elastic restoring force, so that the elastic base 31 moves away from the protective cover 6 to close the gas discharge channel 6 for normal pressure relief.

In addition, with reference to FIG. 7, the elastic member 32 is fitted over a side of the elastic base 31 close to the protective cover 4 and partially protrudes outside the elastic base 31, so that the elastic member 32 may have enough compression deformation, and may be compressed to drive the elastic base 31 to move when it is subjected to a pressure.

In some embodiments, the elastic member 32 may be a spring or the elastic member 32 may be made of other materials with elastic cushioning.

In addition, the gas pressure to compress the elastic member 32 may also be controlled by changing the stiffness of the elastic member 32 and the material model, that is, the opening pressure of the gas discharge channel of the pressure relief device is controlled, and the rapid pressure relief under different pressure values may be realized. Specifically, a corresponding pressure value may be obtained according to the ideal gas equation of state PV=nRT, and then the stiffness and resilience of the elastic member 32 are selected according to the pressure value and the actual need.

In a specific implementation, with reference to FIGS. 6A, 6B, 7, 10, and 14, a cross-section of elastic member 32 gradually increases along a direction from the valve body 2 to the protective cover 4. That is to say, the elastic member 32 may be pagoda-shaped. A space between the protective cover 4 and the elastic base 31 is small, and the pressure in the battery pack is large when the thermal runaway of the battery pack, so the elastic member 32 is set to be pagoda-shaped, which may not only save its arrangement space, but also make the elastic member 32 be able to provide a large resilience kinetic energy.

In some embodiments, a top diameter and a bottom diameter of the elastic member 32 may be determined according to its arrangement space and resilience force requirements.

In a specific implementation, as shown in FIGS. 8 and 11, a first sealing member 21 is arranged between valve body 2 and elastic base 31, and the first sealing member 21 is configured to seal when the valve body 2 is fitted with the elastic base 31. That is to say, when the elastic base 31 is fitted with the valve body 2, that is, when the gas discharge channel 6 is not opened, the valve body 2 and the elastic base 31 may be sealed through the first sealing member 21 at this moment. When the elastic base 31 is separated from the valve body 2, that is, when the gas discharge channel 6 is opened, then the valve body 2 and the elastic base 31 are not sealed. The first sealing member 21 may be specifically a sealing strip, such as an O-shaped sealing strip.

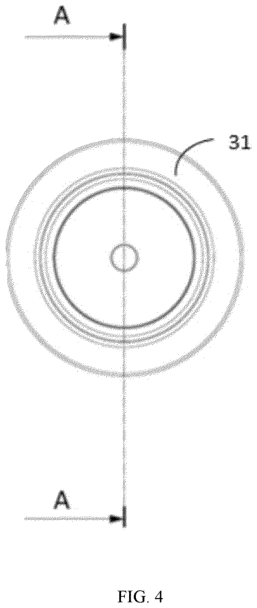

With reference to FIGS. 4 and 5, a reserved gap S is arranged between the baffle 5 and the gas-permeable membrane 1, and between the gas-permeable membrane 1 and the elastic seat assembly 3. The reserved gap S may be used to allow gas flow, and may also avoid that the gas-permeable membrane 1 will loosen and not be fitted to the baffle 5 or the elastic seat assembly 3 after long-term use, resulting in gas discharge and pressure relief failure.

In some embodiments, the reserved gap S may be 1mm or 0.8mm, and the specific reserved gap S value may be selected according to the actual situation.

With reference to FIGS. 2, 7 and 10, a side of valve body 2 away from protective cover 4 is coupled to a component to be mounted, and a second sealing member 22 is arranged between the valve body 2 and the component to be mounted. That is, when an end of valve body 2 away from protective cover 4 is coupled to the component to be mounted on the battery pack, in order to ensure the airtightness of the coupling between the valve body 2 and the component to be mounted, the second sealing member 22 may be arranged between the valve body 2 and the component to be mounted. The second sealing member 22 may be specifically a sealing ring, such as an O-shaped sealing ring.

In embodiments of the present disclosure, in order to facilitate the mounting of the second sealing member 22, a side of the valve body 2 away from the protective cover 4 may define a reserved slot 23 adapted to the second sealing member 22, and the second sealing member 22 is arranged in the reserved slot 23 and is in an interference fit with the reserved slot 23, to ensure that the second sealing member 22 will not fall off after being arranged in the reserved slot 23.

In some embodiments, the second sealing member 22 may be an O-shaped sealing ring, so the reserved slot 23 is correspondingly set to an annular shape. Specifically, the shape of the reserved slot 23 may be adapted to the shape of the second sealing member 22, and the shape of the reserved slot 23 and the shape of the second sealing member 22 may be selected according to actual needs.

In a specific implementation, a peripheral wall of the second sealing member 22 is provided with a plurality of protrusions 24 spaced from each other along a circumferential direction of the second sealing member 22, the second sealing member 22 is arranged in the reserved slot 23 and is in an interference fit with the reserved slot 23 through the plurality of protrusions 24. Specifically, the protrusion 24 may be a circular protrusion or a rectangular protrusion, and the protrusions may be evenly distributed along the circumferential direction of the second sealing member 22. Specifically, the number of the protrusions 24 is set according to actual needs.

In addition, a protrusion height of the protrusion 24 may be 0.25mm, or 0.3mm, which may be set according to actual needs.

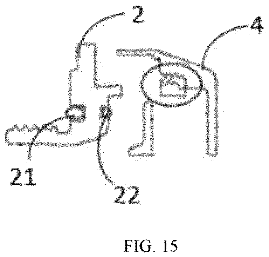

In addition, with reference to FIG. 15, the protective cover 4 and the valve body 2 may be locked and disassembled through a threaded fit, so that the mounting is simple. Alternatively, in other embodiments, the protective cover 4 and the valve body 2 may also be snapped together or coupled by a fastener.

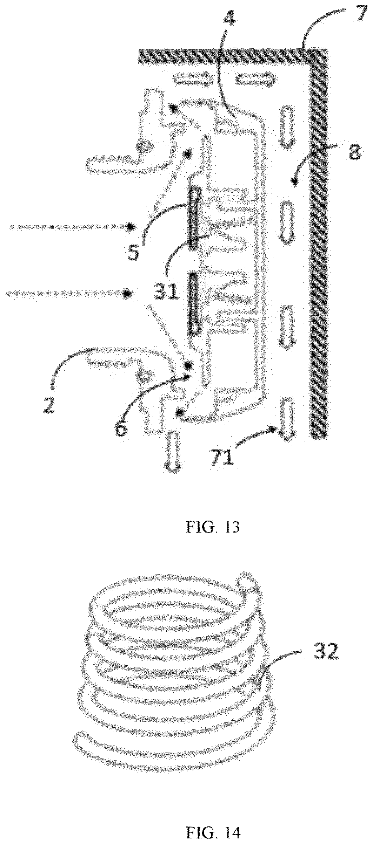

With reference to FIG. 13, the pressure relief device of embodiments of the present disclosure further includes a shield cover 7. The shield cover 7 is provided on a side of the protective cover 4 away from the valve body 2, a conveying channel 8 in communication with the gas discharge channel 6 is defined between the shield cover 7 and the protective cover 4, and a bottom of the shield cover 7 defines a gas discharge port 71 in communication with the conveying channel 8. That is to say, by arranging the shield cover 7 to enclose the conveying channel 8 together with the protective cover 4, a conveying direction of the gas flow may be changed, that is, a pressure relief direction is adjustable.

Because the pressure relief device is usually mounted at a tail of the battery pack, on some hybrid vehicles, there are flammable and explosive objects such as a fuel tank in a rear area of the pressure relief device, so the gas discharge direction of the pressure relief device should avoid the flammable and explosive objects. Accordingly, the pressure relief direction may be changed by the shield cover 7. Specifically, the gas discharge port 71 may be arranged in the bottom of the shield cover 7, and the ground is generally below the bottom, so that a discharged high-temperature gas is discharged through the gas discharge port 71, and the ignition of the flammable and explosive objects may be avoided.

It should be noted that, in embodiments of the present disclosure, the valve body 2, the elastic base 31 and the protective cover 4 may be cast by an alloy or plastic composite material.

With reference to FIGS. 1 to 15, embodiments of the present disclosure also provide a battery pack, including the above-mentioned pressure relief device.

The specific structure and implementation principle of the pressure relief device in embodiments of the present disclosure are the same as the structure of the pressure relief device provided in above embodiments, and may bring the same or similar technical effects, which will not be repeated herein, and may specifically refer to the description of above embodiments.

With reference to FIGS. 1 to 15, embodiments of the present disclosure further provide a vehicle, including the battery pack described above.

The specific structure and implementation principle of the battery pack in embodiments of the present disclosure are the same as the structure of the battery pack provided in above embodiments, and may bring the same or similar technical effects, which will not be repeated herein, and may be specifically refer to the description of above embodiments.

It is important to note that in this article, relational terms such as "first" and "second" are used solely to distinguish one entity or operation from another, and do not necessarily require or imply any such actual relationship or sequence between those entities or operations. Further, the term "including", "containing" or any other variation thereof is intended to cover non-exclusive inclusion so that a process, process, article or apparatus that includes a series of elements includes not only those elements, but also other elements that are not expressly listed, or that are inherent to such process, method, article or apparatus. In the absence of further restrictions, the elements defined by the statement "including a ......" do not preclude the existence of other identical elements in the process, method, article or apparatus that includes the elements.

In the present disclosure, unless otherwise expressly specified or qualified, the terms "mounted", "connected", "coupled", "fixed", etc., shall be construed broadly, for example, they may be fixed, detachable, or integral; It may be mechanically connected, electrically connected or communicative with each other; It may be directly connected or indirectly connected by an intermediate medium, it may be an internal connection between two elements or an interaction between two elements, unless otherwise expressly specified. For those of ordinary skill in the art, the specific meaning of the above terms in the present disclosure may be understood on a case-by-case basis.

In the present disclosure, unless otherwise expressly specified and qualified, the first feature may be "above" or "below" the second feature in direct contact with the first and second features, or indirect contact between the first and second features through an intermediary. Moreover, the first feature is "above", "on top of", and "on" the second feature, but the first feature is directly above or obliquely above the second feature, or simply indicates that the first feature is horizontally higher than the second feature. The first feature is "below", "under", and "on bottom of" the second feature, either directly below or diagonally below the second feature, or simply indicating that the horizontal height of the first feature is less than the second feature.

In the present disclosure, the terms "an embodiment", "some embodiments", "examples", "specific examples", or "some examples" and the like are intended to mean specific features, structures, materials, or features that are included in at least one embodiment or example of the present disclosure in conjunction with the embodiment or the description of the example. In this specification, the schematic formulation of the above terms does not have to be for the same embodiments or examples. Furthermore, the specific features, structures, materials, or features described may be combined in an appropriate manner in any one or more embodiments or examples. In addition, without contradicting each other, those skilled in the art may combine and combine the different embodiments or examples described in this specification and the features of the different embodiments or examples.

Notwithstanding above-mentioned embodiments shown and described, it is understood that the above-mentioned embodiments are illustrative and cannot be construed as limiting the present disclosure, and the changes, modifications, substitutions and variants made by those skilled in the art to the embodiments are within the scope of protection of the present disclosure.

## Claims

1. A pressure relief device, comprising: a gas-permeable membrane, a valve body, an elastic seat assembly, and a protective cover,
wherein the gas-permeable membrane is arranged at a side of the elastic seat assembly and configured for gas discharge;
the valve body is located at a side of the elastic seat assembly close to the gas-permeable membrane; the protective cover covers a side of the valve body away from the gas-permeable membrane; and the elastic seat assembly is located between the valve body and the protective cover, and the elastic seat assembly is movable towards the protective cover to define a gas discharge channel between the valve body and the elastic seat assembly, or movable away from the protective cover to close the gas discharge channel.

2. The pressure relief device according to claim 1, wherein the elastic seat assembly comprises an elastic base and an elastic member, the elastic base is arranged between the valve body and the protective cover, and the elastic member is fitted over a side of the elastic base close to the protective cover and partially protrudes outside the elastic base; and
the elastic base moves towards the protective cover when the elastic member is subjected to a force, to define the gas discharge channel between the valve body and the elastic base, or moves away from the protective cover under an action of an elastic deformation force of the elastic member, to close the gas discharge channel.

3. The pressure relief device according to claim 2, wherein a cross-section of the elastic member gradually increases along a direction from the valve body to the protective cover.

4. The pressure relief device according to claim 3, wherein the elastic member is pagoda-shaped.

5. The pressure relief device according to any one of claims 2 to 4, wherein a first sealing member is arranged between the valve body and the elastic base, and the first sealing member is configured to seal the valve body and the elastic base when the gas discharge channel is closed.

6. The pressure relief device according to any one of claims 1 to 5, further comprising a baffle, wherein the baffle is arranged at a side of the gas-permeable membrane away from the elastic seat assembly, to protect the gas-permeable membrane, and a gas-permeable hole is provided in the baffle.

7. The pressure relief device according to claim 6, wherein a reserved gap is arranged between the baffle and the gas-permeable membrane, and between the gas-permeable membrane and the elastic seat assembly.

8. The pressure relief device according to claim 7, wherein the reserved gap is in a range of 0.8mm to 1mm.

9. The pressure relief device according to any one of claims 1 to 8, wherein a side of the valve body away from the protective cover is coupled to a component to be mounted, and a second sealing member is arranged between the valve body and the component to be mounted; and
a side of the valve body away from the protective cover defines a reserved slot adapted to the second sealing member, and the second sealing member is arranged in the reserved slot and is in an interference fit with the reserved slot.

10. The pressure relief device according to claim 9, wherein a peripheral wall of the second sealing member is provided with a plurality of protrusions spaced from each other along a circumferential direction of the second sealing member, and the second sealing member is arranged in the reserved slot and is in an interference fit with the reserved slot through the plurality of protrusions.

11. The pressure relief device according to claim 10, wherein a protruding height of the protrusion is in a range of 0.25mm to 0.3mm.

12. The pressure relief device according to any one of claims 1 to 11, further comprising a shield cover, wherein the shield cover is provided on a side of the protective cover away from the valve body, and a conveying channel in communication with the gas discharge channel is defined between the shield cover and the protective cover, and a bottom of the shield cover defines a gas discharge port in communication with the conveying channel.

13. The pressure relief device according to any one of claims 2 to 12, wherein the valve body, the elastic base and the protective cover are cast by an alloy or plastic composite material.

14. A battery pack, comprising a pressure relief device according to any one of claims 1 to 13.

15. A vehicle, comprising a battery pack according to claim 14.
